# EUROPÄISCHE PATENTANMELDUNG

(11) **EP 3 486 997 A1**
(43) Veröffentlichungstag der Anmeldung: **22.05.2019**
(21) Anmeldenummer: 18200316.0
(22) Anmeldetag: 15.10.2018
(51) Int. Cl.: H01Q 1/12, B32B 17/10, H01Q 1/32

(54) **KRAFTFAHRZEUG MIT EINEM GLASDACH UND MIT EINER AUF DIESEM GLASDACH AUFSITZENDEN ANTENNENANORDNUNG**

(30) Priorität: 21.11.2017 DE 102017220732
(71) Anmelder: Ford Global Technologies, LLC, Dearborn, MI 48126 (US)
(72) Erfinder: Linow, Angela, 50679 Köln (DE); Delgado, Vicky Patricia, 50672 Köln (DE); Hahnenberg, Daniel, 53909 Zülpich (DE); Krause, Enrico, 50672 Köln (DE); Garrido Martinez, Victor, 50823 Köln (DE); Bosbach, Marc, 41569 Rommerskirchen (DE); Benderoth, Thomas, 51647 Gummersbach (DE); Jakobs, Werner, 51467 Bergisch Gladbach (DE)
(74) Vertreter: Dörfler, Thomas

(57) **Zusammenfassung**

Das Kraftfahrzeug hat ein Glasdach (20), eine auf diesem Glasdach (20) aufsitzende Antennenanordnung (22) und einen metallischen Rahmen (30). Eine Öffnung (28) des Glasdachs (20) befindet sich unterhalb der Antennenanordnung (22) und wird von dieser überdeckt. Der Rahmen (30) befindet sich unter dem Glasdach (20) und bildet einen Dom (32) aus, der in die Öffnung (28) des Glasdachs (20) hineinreicht und mit dem die Antennenanordnung (22) mechanisch verbunden ist. Auf der Unterseite des Glasdachs (20) ist eine der Antennenanordnung (22) zugeordnete Reflexionsfläche (42) angebracht, die eine sich quer zur z-Richtung erstreckende Gitterstruktur aus sich kreuzenden Linien aufweist. Die Linien sind mit einer Metallisierung versehen, die eine Breite von 0, 5 bis 2 mm hat. Die sich kreuzenden Linien begrenzen freie Felder (48), welche nicht metallisiert sind und eine maximale lichte Abmessung von 3 bis 15 mm aufweisen.

## Beschreibung

Die Erfindung bezieht sich auf ein Kraftfahrzeug mit einem Glasdach und mit einer auf diesem Glasdach aufsitzenden Antennenanordnung. Dabei hat das Glasdach eine Öffnung, die sich unterhalb der Antennenanordnung befindet und von dieser überdeckt wird. Ein metallischer Rahmen befindet sich unter dem Glasdach und trägt dieses.

In Zukunft werden mehr und mehr Funkverbindungen zwischen einem Kraftfahrzeug und festen Stationen, wie beispielsweise Internet, und anderen Kraftfahrzeugen stattfinden und benötigt werden. Diese Funkverbindungen müssen dabei über einen großen Frequenzbereich realisiert werden können. Der Frequenzbereich liegt typischerweise zwischen 700 bis 2700 MHz. Hinzu kommen der Empfang von Rundfunksignalen zumindest im UKW-Bereich, der sich allgemein von 30 bis 300 MHz erstreckt, eventuell auch bei tieferen Frequenzen, zum Beispiel Mittelwelle und Langwelle.

Mit einer einzigen Empfangsantenne ist dies in der Regel nicht zu realisieren. Die Erfindung bezieht sich insbesondere auf den für Mobilfunk (Handys) und damit zum Beispiel für die Kommunikation von Kraftfahrzeug zu Kraftfahrzeug genutzten o.g. Frequenzbereich von 700 bis 2700 MHz. Hierfür soll eine geeignete Antennenanordnung angegeben werden. Diese kann dann mit einer Zusatzfunktion für andere Frequenzbereiche ausgerüstet werden, also zum Beispiel für einen Empfang von UKW mit einem zusätzlichen Antennenstab.

Unter Antennenanordnung wird im Folgenden ein Bauteil verstanden, das ein abgeschlossenes Gehäuse in Form von zum Beispiel einer Finne aufweist, andere Formen sind möglich. Dieses Gehäuse befindet sich in der Regel auf dem Dach eines Kraftfahrzeugs und ist daher von außen bei Blick auf das Kraftfahrzeug sichtbar. Die Antennenanordnung wird über ein Anschlusskabel, das durch das Dach des Kraftfahrzeugs geführt ist, elektrisch angeschlossen. Im Gehäuse sind eine Empfangsantenne für den o.g. Frequenzbereich und gegebenenfalls zusätzliche elektronische Baugruppen wie Verstärker und Anpassungsglieder untergebracht. Häufig ist im Gehäuse auch ein GPS Empfänger angeordnet.

Die Empfangsantenne benötigt eine metallisch leitende Reflexionsfläche. Diese liegt auf Massepotenzial und ist bei einem Glasdach nicht gegeben. Der metallische Rahmen ist einerseits zu weit unterhalb des Glasdachs und andererseits nicht in der ausreichenden Fläche vorhanden. Es besteht daher der Bedarf, eine Reflexionsfläche anzugeben und so auszubilden, dass sie für den o.g. Frequenzbereich von 700 bis 2700 MHz im Zusammenwirken mit der Empfangsantenne einen ausreichenden Gewinn in dB über den Frequenzbereich liefert. Der Gewinn sollte im Vergleich mit einer Groundplane Antenne über den gesamten Frequenzbereich möglichst nicht mehr als 2 dB abfallen. Eine Groundplane Antenne ist aus dem Stand der Technik bekannt, es handelt sich um einen Lambda/4 Strahler, der üblicherweise vertikal orientiert ist. Im Gegensatz zu einer Dipolantenne ist die Groundplane Antenne unsymmetrisch aufgebaut. Die zweite Hälfte der Antenne wird durch eine Reflexionsfläche gebildet, sie wird auch als Gegengewicht bezeichnet. Um sie geht es hier in der Erfindung.

Aus WO 2010/020327 A1 ist eine Antennenanordnung bekannt, bei der die Reflexionsfläche aus einem elektrisch leitfähigen Material, insbesondere Metall, gefertigt ist, das mit dem Glasdach verbunden ist. Die Reflexionsfläche kann durch ein feinmaschiges Gitter realisiert sein. Zusätzlich lehrt diese Schrift noch eine Einrichtung zum Strahlformen, die elektrisch massefrei ist.

Aus DE 10 2012 111 571 A1 ist ein Massefeld, das eine Reflexionsfläche bildet, bekannt, es ist als netzförmiges Feld aus Metalldrähten erstellt, die in ein Folienmaterial eingeschmolzen sind und als solches in die Scheibe einzulaminieren sind.

Aus der DE 699 32 930 T2 ist eine Fahrzeugantenne bekannt, die eine Reflexionsfläche hat, die aus einer transparenten, zwischen zwei Glasscheiben laminierten Beschichtung gebildet ist.

Aus der DE 10 2006 045 514 A1 ist eine transparente Flächenelektrode auf einem Glas bekannt, sie besteht aus einem Gitternetz von elektrisch leitfähigen, sehr feinen Linien mit Knoten und Maschen.

Bei einem Unfall des Kraftfahrzeugs besteht die Gefahr, dass das Glasdach beschädigt wird und zerbricht. Das Glasdach muss den sogenannten ECE R43 Glasbruchtest erfüllen. Dies bedeutet, dass bei Glasbruch die entstehenden Glasscherben eine gewisse Größe nicht überschreiten dürfen. Wenn man eine Reflexionsfläche am Glasdach anbringt, wird dadurch das Bruchverhalten des Glases beeinflusst. Es muss sichergestellt sein, dass die Reflexionsfläche so ausgeführt ist, dass das Glasdach den genannten Test besteht.

Hiervon ausgehend ist es Aufgabe der Erfindung, eine Reflexionsfläche für die Antennenanordnung so auszubilden und anzugeben, dass sie einerseits den genannten Glasbruchtest besteht und andererseits einen ausreichend hohen Gewinn im Frequenzbereich von 700 bis 2700 MHz liefert.

Diese Aufgabe wird gelöst durch Kraftfahrzeug mit einem Glasdach, mit einer auf diesem Glasdach aufsitzenden Antennenanordnung, wobei das Glasdach eine Öffnung aufweist, die sich unterhalb der Antennenanordnung befindet und von dieser überdeckt wird, mit einem metallischen Rahmen, der sich unter dem Glasdach befindet und einen Dom ausbildet, der in die Öffnung des Glasdachs hineinreicht und mit dem die Antennenanordnung mechanisch verbunden ist, wobei auf der Unterseite des Glasdachs eine der Antennenanordnung zugeordnete Reflexionsfläche angebracht ist, die eine sich quer zur z-Richtung erstreckende Gitterstruktur aus sich kreuzenden Linien aufweist, wobei die Linien eine Metallisierung aufweisen, die eine Breite von 0,5 bis 2 mm hat, und die sich kreuzenden Linien freie Felder begrenzen, welche nicht metallisiert sind und eine maximale lichte Abmessung von 3 bis 15 mm aufweisen.

Die erfindungsgemäße Lösung ermöglicht einen sehr vorteilhaften Kompromiss zwischen einer Antenne mit guten Empfangs-und Sendeeigenschaften, also ausreichendem Gewinn, und einer Ausbildung der Reflexionsfläche an einem Glasdach, wobei das Glasdach trotz dieser Reflexionsfläche den Glasbruchtest erfüllt.

Vorzugsweise sind die freien Felder quadratisch. Dies ermöglicht eine einfache Herstellung, zum Beispiel im Siebdruckverfahren. Vorzugsweise liegt die Seitenlänge der quadratischen Felder im Bereich von 3 bis 10, insbesondere 4 bis 7 mm. Bei diesen Abmessungen wird der Glasbruchtest erfüllt und ist der Antennengewinn in einem vernünftigen Bereich. Bevorzugt wird der Test erfüllt und liegt der Antennengewinn in einem guten Bereich, wenn die Seitenlänge 5 mm plusminus 20%, insbesondere plusminus 10 % beträgt. Die Metallisierung ist bevorzugt 1 bis 5 µm dick. Diese Dicke ist ausreichend für die elektrische Leitfähigkeit, sie spart Metall, insbesondere Silber. Die Metallisierung kann durch Auftragen einer Metallpaste, insbesondere Silberpaste, erstellt sein. Die Silberpaste wird aufgetragen und anschließend eingebrannt. Vorzugsweise ist die Reflexionsfläche im wesentlichen spiegelsymmetrisch zu einer x-z-Ebene, die durch die Mitte der Antennenanordnung verläuft. Dadurch sind die Empfangskeulen der Antenne im wesentlichen spiegelsymmetrisch zu einer x-z-Ebene, die durch die Antennenanordnung geht. Vorzugsweise ist die Reflexionsfläche eine elektrisch leitende zusammenhängende Fläche. Es ist daher nur eine Kontaktierung erforderlich. Vorzugsweise beträgt die Abmessung der Reflexionsfläche in x-Richtung 10 bis 30 %, vorzugsweise etwa 20 %, der Abmessung in y-Richtung. Vorzugsweise befindet sich die Öffnung des Glasdachs außerhalb der Reflexionsfläche befindet. Dies ermöglicht eine gute Abdichtung.

Weitere Vorteile ergeben sich aus den übrigen Ansprüchen.

Zwei Ausführungsbeispiele der Erfindung werden im Folgenden näher erläutert und beschrieben, sie sind nicht einschränkend zu verstehen. Diese Ausführungsbeispiele werden unter Bezugnahme auf die Zeichnung beschrieben, die Figuren der Zeichnung zeigen folgendes:
- Figur 1: eine schnittbildliche Darstellung der Antennenanordnung auf dem Glasdach,
- Figur 2: eine Untersicht auf das Glasdach mit der Reflexionsfläche in einer ersten Ausführung,
- Figur 3: eine Untersicht wie Figur 2 für eine zweite Ausführung und
- Figur 4: eine Detailansicht der Reflexionsfläche.

Die Erfindung wird anhand eines rechtshändigen, orthogonalen x, y, z Koordinatensystems beschrieben. Die z-Richtung geht lotrecht nach oben. Die x-Richtung ist entgegen der normalen Fahrtrichtung für Geradeausfahrt des hier nicht näher dargestellten, an sich bekannten Fahrzeugs. Die x-Richtung und die y-Richtung liegen in der Fahrebene.

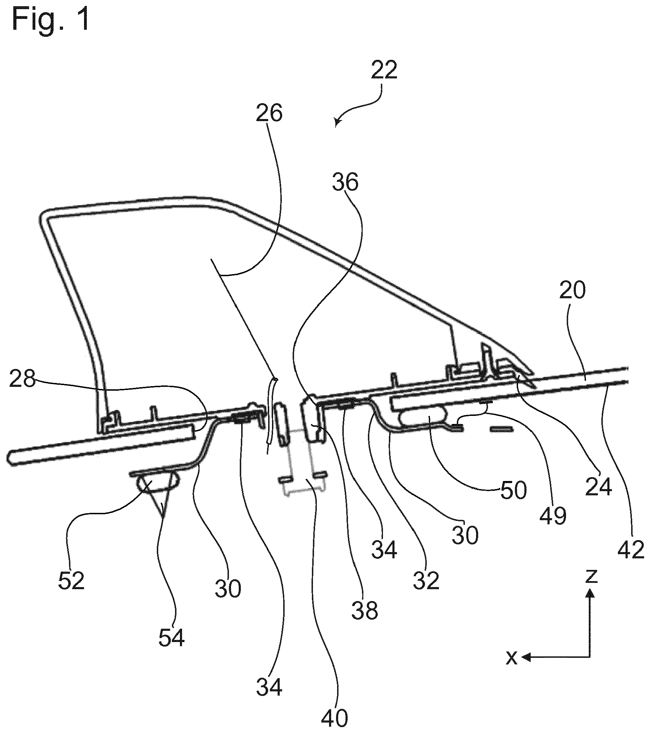

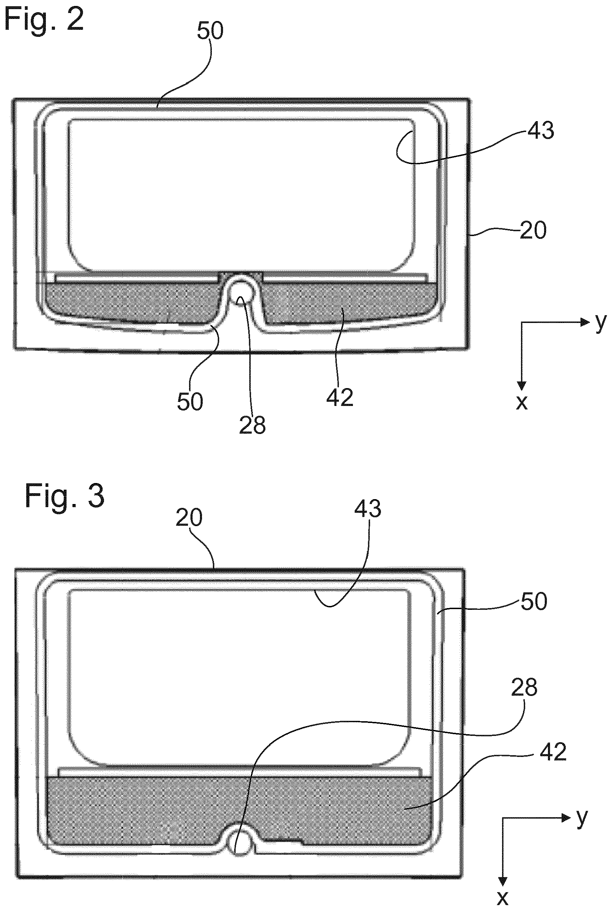

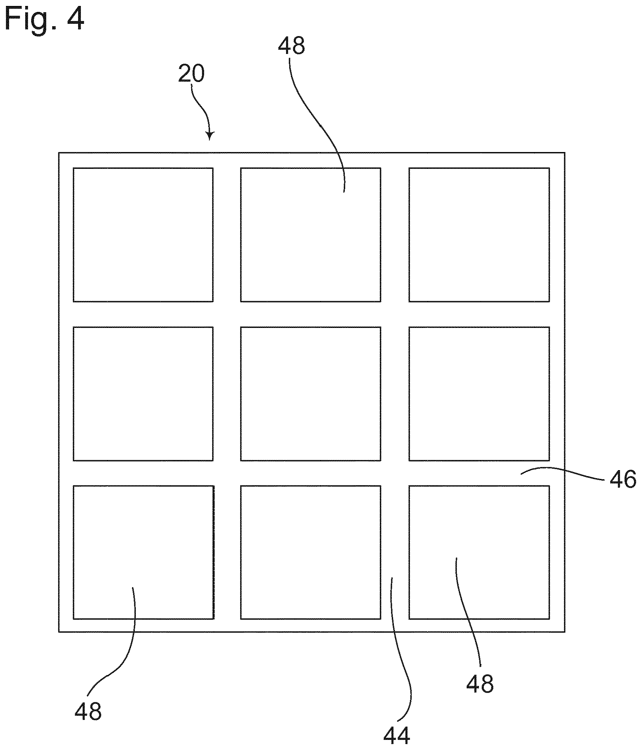

Von dem aus dem Stand der Technik bekannten Kraftfahrzeug ist ein Glasdach 20 gezeigt. Es besteht aus Einscheiben-Sicherheitsglas mit einer Dicke von etwa 3,7 mm. Figur 2 zeigt ein erstes Ausführungsbeispiel für das Glasdach 20, wie es in Figur 1 Verwendung findet. Die Figuren 3 und 4 zeigen weitere Ausführungsbeispiele, die unterschiedlichen Glasdächer 20 werden für unterschiedliche Fahrzeugtypen eingesetzt.

Figur 1 zeigt eine Antennenanordnung 22 in Schnitt bildliche Darstellung, Schnittebene ist eine x-z Ebene durch die Mitte der Antennenanordnung 22. Diese hat ein Gehäuse, das die Form einer Finne hat. Nach unten ist das Gehäuse durch eine Abschlussplatte abgeschlossen. An deren Außenrand läuft eine äußere Dichtleiste 24. In Figur 1 ist im Wesentlichen das leere Gehäuse dargestellt, es ist ein Antennenstab 26 in prinzipieller Darstellung eingezeichnet, der zur Erläuterung dient. In der Regel von einer gedruckten Schaltung ausgebildet. Weitere Bauteile, die das Gehäuse aufnehmen kann, sind nicht dargestellt. Der Antennenstab 26 ist mit einer Zuleitung 27 verbunden.

Das Gehäuse sitzt auf dem Glasdach 20 auf, dabei kommt die Dichtleiste 24 in Kontakt mit dem Glasdach 20 und bildet eine erste Abdichtung.

Das Glasdach 20 hat eine Öffnung 28, die sich unterhalb des Gehäuses befindet und von der Abschlussplatte überdeckt wird. Die Öffnung 28 befindet sich innerhalb der Dichtleiste 24. Die Zuleitung 27 verläuft durch diese Öffnung 28.

Unterhalb des Glasdachs 20 befindet sich ein metallischer Rahmen 30. Er bildet einen Dom 32 aus, der in die Öffnung 28 hineinragt und dort Kontakt mit dem Gehäuse hat. Dabei ist eine Dichtung 34 zwischengefügt, die als eine erste Klebenaht 34 ausgebildet ist und die um eine im Dom 32 ausgebildete Passöffnung 36 als geschlossener Ring herumläuft.

Das Gehäuse hat einen nach unten, in negativer z-Richtung vorspringenden Ansatz 38, der der Passöffnung 36 entsprechend geformt ist und nur in einer einzigen Orientierung in diese hineinpasst. Über eine Spannschraube 40 wird das Gehäuse gegenüber dem Rahmen 30 verspannt. Dadurch ist die Antennenanordnung 22 mit dem metallischen Rahmen 30 mechanisch verbunden.

Auf der Unterseite des Glasdachs 20 ist eine der Antennenanordnung 22 zugeordnete Reflexionsfläche 42 aufgebracht. Sie besteht aus sich kreuzenden Linien, nämlich den ersten Linien 44 und den zweiten Linien 46, siehe Figur 5. Sie weisen eine Metallisierung auf, im Ausführungsbeispiel erstellt durch Auftragen von Silber. Die Linien 44, 46 haben eine Breite von etwa 1 mm. Sie begrenzen freie Felder 48, die im Ausführungsbeispiel und auch insgesamt bevorzugt quadratisch ausgebildet sind. Sie können auch 6-eckig sein, entsprechend einer Wabenform. Die Quadrate haben eine Seitenlänge von 5 mm. Die freien Felder 48 haben maximale lichte Abmessung in ihrer Diagonalen von etwa 7 mm. Die freien Felder 48 sind in den gezeigten Ausführungsbeispielen alle formgleich. Es ist möglich, dass benachbarte freie Felder 48 unterschiedliche Form aufweisen. Die Reflexionsfläche 42 ist elektrisch leitend zusammenhängend. Sie ist über eine Verbindung 49 elektrisch mit dem Rahmen 30 verbunden, der auf Massepotenzial liegt.

Die Metallisierung ist so dünn wie möglich, um Silber zu sparen, aber so dick wie nötig, um eine ausreichende Leitfähigkeit zu erhalten. Es hat sich herausgestellt, dass schon Dicke von 0,5 µm genügt. Vorzugsweise liegt die Dicke im Bereich von 1 bis 5 µm.

In der Praxis hatte sich herausgestellt, dass die gesamte mit Silber belegte Fläche etwa 75 000 mm2 beträgt. Vorzugsweise liegt sie im Bereich von 50.000 bis 100.000 mm2.

In bevorzugter Ausbildung verlaufen die ersten Linien 44 in einem Winkel von etwa plus 45° zur x-Richtung und verlaufen die zweiten Linien 46 in einem Winkel von minus 45° zur x-Richtung.

Wie die die Ausführungsbeispiele nach den Figuren 2 und 3 zeigen, ist die Reflexionsfläche 42 spiegelsymmetrisch zu einer x-z-Ebene, die durch die Mitte der Antennenanordnung 22 verläuft. In diesen Figuren ist mit 43 die transparente Fläche des Glasdachs 30 bezeichnet.

Ebenfalls zeigen die Ausführungsbeispiele, dass sich die Öffnung 28 des Glasdachs 20 außerhalb der Reflexionsfläche 42 befindet. Dies ermöglicht es, eine Abdichtung zwischen der Öffnung 28 und der Reflexionsfläche 42 auszubilden. Diese Abdichtung ist, wie die Figuren 1 bis 4 zeigen, durch eine zweite Klebenaht 50 erreicht. Durch sie ist der Rahmen 30 mit dem Glasdach 20 verbunden. Sie läuft ringförmig um. Die transparente Fläche 43 befindet sich innerhalb des von der zweiten Klebenaht 50 gebildeten Ringes.

Schließlich ist der Rahmen 30 über eine Klebeverbindung 52 mit einem Karosserieteil 54 der ansonsten nicht weiter dargestellten Karosserie des Kraftfahrzeugs verbunden.

Das Kraftfahrzeug hat ein Glasdach 20, eine auf diesem Glasdach 20 aufsitzende Antennenanordnung 22 und einen metallischen Rahmen 30. Eine Öffnung 28 des Glasdachs 20 befindet sich unterhalb der Antennenanordnung 22 und wird von dieser überdeckt. Der Rahmen 30 befindet sich unter dem Glasdach 20 und bildet einen Dom 32 aus, der in die Öffnung 28 des Glasdachs 20 hineinreicht und mit dem die Antennenanordnung 22 mechanisch verbunden ist. Auf der Unterseite des Glasdachs 20 ist eine der Antennenanordnung 22 zugeordnete Reflexionsfläche 42 angebracht, die eine sich quer zur z-Richtung erstreckende Gitterstruktur aus sich kreuzenden Linien aufweist. Die Linien sind mit einer Metallisierung versehen, die eine Breite von 0, 5 bis 2 mm hat. Die sich kreuzenden Linien begrenzen freie Felder 48, welche nicht metallisiert sind und eine maximale lichte Abmessung von 3 bis 15 mm aufweisen.

Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist. Die Anmelderin behält sich vor, beliebige Merkmale und auch Untermerkmale aus den Ansprüchen und/oder beliebige Merkmale und auch Teilmerkmale aus der Beschreibung in beliebiger Art miteinander zu kombinieren, dies auch außerhalb der Merkmale unabhängiger Ansprüche.

### Bezugszeichenliste

- 20: Glasdach
- 22: Antennenanordnung
- 24: Dichtleiste
- 26: Antennenstab
- 27: Zuleitung
- 28: Öffnung
- 30: Rahmen
- 32: Dom
- 34: erste Klebenaht
- 36: Passöffnung
- 38: Ansatz
- 40: Spannschraube
- 42: Reflexionsfläche
- 43: transparente Fläche
- 44: 1. Linie
- 46: 2. Linie
- 48: freies Feld
- 49: Verbindung
- 50: zweite Klebenaht
- 52: Klebeverbindung
- 54: Karosserieteil

## Patentansprüche

1. Kraftfahrzeug mit einem Glasdach (20), mit einer auf diesem Glasdach (20) aufsitzenden Antennenanordnung (22), wobei das Glasdach (20) eine Öffnung (28) aufweist, die sich unterhalb der Antennenanordnung (22) befindet und von dieser überdeckt wird, mit einem metallischen Rahmen (30), der sich unter dem Glasdach (20) befindet und einen Dom (32) ausbildet, der in die Öffnung (28) des Glasdachs (20) hineinreicht und mit dem die Antennenanordnung (22) mechanisch verbunden ist,
**dadurch gekennzeichnet, dass**
auf der Unterseite des Glasdachs (20) eine der Antennenanordnung (22) zugeordnete Reflexionsfläche (42) angebracht ist, die eine sich quer zur z-Richtung erstreckende Gitterstruktur aus sich kreuzenden Linien aufweist, wobei die Linien eine Metallisierung aufweisen, die eine Breite von 0,5 bis 2 mm hat, und die sich kreuzenden Linien freie Felder (48) begrenzen, welche nicht metallisiert sind und eine maximale lichte Abmessung von 3 bis 15 mm aufweisen.

2. Kraftfahrzeug nach Anspruch 1, **dadurch gekennzeichnet, dass** die freien Felder (48) quadratisch sind.

3. Kraftfahrzeug nach Anspruch 2, **dadurch gekennzeichnet, dass** die Seitenlänge der quadratischen Felder im Bereich von 3 bis 10, insbesondere 4 bis 7 mm liegt und vorzugsweise 5 mm beträgt.

4. Kraftfahrzeug nach einem der vorangegangenen Ansprüche, **dadurch gekennzeichnet, dass** die Metallisierung maximal 5 µm dick ist, insbesondere maximal 2 µm dick ist.

5. Kraftfahrzeug nach einem der vorangegangenen Ansprüche, **dadurch gekennzeichnet, dass** die Reflexionsfläche (42) im wesentlichen spiegelsymmetrisch zu einer x-z-Ebene ist, die durch die Mitte der Antennenanordnung (22) verläuft.

6. Kraftfahrzeug nach einem der vorangegangenen Ansprüche, **dadurch gekennzeichnet, dass** die Reflexionsfläche (42) elektrisch leitend zusammenhängend ist.

7. Kraftfahrzeug nach einem der vorangegangenen Ansprüche, **dadurch gekennzeichnet, dass** sich die Abmessung der Reflexionsfläche (42) in x-Richtung 10 bis 30 %, vorzugsweise etwa 20 %, der Abmessung in y-Richtung beträgt.

8. Kraftfahrzeug nach einem der vorangegangenen Ansprüche, **dadurch gekennzeichnet, dass** sich die Öffnung (28) des Glasdachs (20) außerhalb der Reflexionsfläche (42) befindet.

9. Kraftfahrzeug nach einem der vorangegangenen Ansprüche, **dadurch gekennzeichnet, dass** sich die Reflexionsfläche (42) über zumindest 80 %, vorzugsweise zumindest 90 % der Abmessung des Glasdachs (20) in y-Richtung erstreckt.

10. Kraftfahrzeug nach einem der vorangegangenen Ansprüche, **dadurch gekennzeichnet, dass** im Dom (32) eine Passöffnung (36) ausgebildet ist, und dass die Antennenanordnung (22) einen in negativer z-Richtung vorspringenden Ansatz (38) hat, der von der Passöffnung (36) aufgenommen ist.

11. Kraftfahrzeug nach einem der vorangegangenen Ansprüche, **dadurch gekennzeichnet, dass** im Dom (32) eine Passöffnung (36) ausgebildet ist, dass außerhalb der Passöffnung (36) und innerhalb der Öffnung (28) eine geschlossen um die Passöffnung (36) umlaufende erste Klebenaht (34) zwischen einem Gehäuse der Antennenanordnung (22) und dem metallischen Rahmen (30) ausgebildet ist.

12. Kraftfahrzeug nach einem der vorangegangenen Ansprüche, **dadurch gekennzeichnet, dass** der metallische Rahmen (30) über eine Klebeverbindung (52) mit einem Karosserieteil (54) des Kraftfahrzeugs verbunden ist.
